# DEMANDE DE BREVET EUROPEEN

(11) **EP 0 695 595 A1**
(43) Date de publication de la demande: **07.02.1996**
(21) Numéro de dépôt: 95420220.6
(22) Date de dépôt: 26.07.1995
(51) Int. Cl.: B22F 9/08, C01B 33/02, B01J 2/06

(54) **Procédé de préparation de granules de silicium à partir de métal fondu**

(30) Priorité: 04.08.1994 FR 9409874
(71) Demandeur: PECHINEY ELECTROMETALLURGIE, F-92400 Courbevoie (FR)
(72) Inventeur: Sales, Maurice, F-74940 Annecy le Vieux (FR)
(74) Mandataire: Mougeot, Jean-Claude

(57) **Abrégé**

L'invention concerne un procédé de préparation de granules de silicium ou d'alliage de silicium à partir de métal liquide par solidification dans un bain de refroidissement. Il se caractérise en ce que le débit de métal liquide est maintenu constant pendant toute la durée de la granulation à l'aide d'un dispositif de régulation.

L'invention concerne également un dispositif de régulation pour la mise en oeuvre du procédé, constitué d'une poche de coulée, d'un basculeur de poche et d'un actionneur régulé commandant le basculeur.

Le silicium granulé ainsi obtenu est particulièrement adapté à la synthèse des méthylchlorosilanes pour la fabrication des silicones.

## Description

### Domaine technique de l'invention

L'invention concerne un procédé de préparation de granules de silicium métallurgique ou d'alliage de silicium à partir de métal fondu, le produit obtenu étant particulièrement adapté à la fabrication de méthylchlorosilanes.

### Problème posé

Une des utilisations importantes du silicium métallurgique, obtenu par réduction carbothermique de la silice au four électrique, est la préparation des chlorométhylsilanes destinés à la fabrication des silicones.

Les caractéristiques du silicium destiné à la réaction de chlorométhylation sont fixées par un certain nombre de paramètres liés au procédé de production. Parmi ces paramètres, la vitesse de solidification joue un rôle important, car elle modifie:
- la taille des grains de silicium et des composés intermétalliques formés avec les autres éléments présents dans l'alliage,
- pour une composition chimique donnée de l'alliage, la proportion de composés intermétalliques,
- la structure physique du silicium.

Il existe ainsi une fourchette de vitesses de solidification qui conduit à des performances optimales pour le silicium utilisé dans cette réaction. Le contrôle de cette vitesse de solidification se fait par la taille des grains de silicium solidifiés et par la puissance thermique évacuée à la surface des grains.

Le besoin s'est donc fait sentir, pour cette application, de disposer d'une méthode industrielle de préparation de particules de silicium de granulométrie moyenne, avec une vitesse de solidification élevée, mais contrôlée.

Par ailleurs, le silicium ainsi solidifié doit présenter une faible teneur en oxygène, inférieure à 0,15%, car la présence d'une couche trop épaisse de phase oxydée à la surface des grains est un obstacle à la réaction du silicium avec le chlorure de méthyle.

Le problème posé est donc de mettre au point un procédé de préparation de granulés d'alliage de silicium répondant aux exigences suivantes:
- facilité de mise en oeuvre industrielle
- granulométrie moyenne, entre 1 et 15 mm
- teneur en oxygène basse, comprise de préférence entre 0,05 et 0,15%.

### Etat de la technique

Les brevets EP 0350683 de BAYER et EP 0372918 d'ELKEM décrivent la préparation de silicium atomisé par pulvérisation du silicium liquide dans un jet de gaz. La structure cristalline de ce produit n'est pas exactement celle souhaitée pour la chlorométhylation; on constate en effet que les composés intermétalliques y sont très dispersés à cause d'une vitesse de solidification trop rapide.

La granulation dans l'eau conduit au contraire à une structure plus proche de celle recherchée, car l'immersion brutale des goutelettes de silicium liquide dans l'eau conduit, à cause du coefficient d'échange thermique limité entre l'eau et le métal liquide, à une vitesse de refroidissement plus adéquate.

Un procédé de ce type est décrit dans le brevet français n° 1602483 d'UDDEHOLM. Pour fabriquer des granulés d'acier ou de matériaux à point de fusion élevé, on fait tomber sur une plaque réfractaire horizontale la masse en fusion à une vitesse telle qu'elle est divisée par sa propre énergie cinétique en gouttes distinctes qui rebondissent vers le haut et vers l'extérieur de la plaque et tombent dans le bain de refroidissement qui se trouve au dessous de la plaque.

Le brevet EP 0402665 concerne un perfectionnement du procédé précédent consistant à lever et abaisser périodiquement la plaque d'impact pour faire varier de façon continue le rayon de la zone annulaire dans laquelle les gouttes de métal heurtent la surface du bain de refroidissement.

La technique décrite dans ces brevets conduit, lorsqu'elle est appliquée au silicium, à des explosions fréquentes. On peut réduire ces risques en faisant circuler latéralement le liquide de refroidissement, comme indiqué dans la demande de brevet EP 0522844 d'ELKEM, mais on ne parvient pas à les éliminer complètement.

### Objet de l'invention

Dans le but d'obtenir un silicium métallurgique granulé particulièrement adapté à la réaction de chlorométhylation par un procédé ne présentant aucun risque, l'invention a pour objet un procédé de préparation de granules de silicium ou d'alliage de silicium à partir de métal fondu par solidification dans un bain de refroidissement, caractérisé en ce que le débit de métal fondu est maintenu constant pendant toute la durée de la granulation à l'aide d'un dispositif de régulation. L'invention a également pour objet un dispositif de régulation pour la mise en oeuvre du procédé précédent constitué d'une poche de coulée, d'un basculeur de poche et d'un actionneur régulé commandant le basculeur.

### Description de l'invention

La demanderesse s'est en effet aperçu, à l'occasion de ses recherches, que la difficulté de la granulation du silicium provient essentiellement de la difficulté d'obtenir un jet de métal fondu de débit régulier.

Elle a constaté, au cours d'essais de granulation par quantités de 450 kg dans une cuve de granulation contenant 4500 l d'eau, que la probabilité d'explosion augmentait très vite avec le débit de silicium liquide: pratiquement nulle à 60 Kg/mn, elle atteignait 0,5 à 300 kg/mn., ce qui montre la nécessité de contrôler la valeur instantanée du débit de silicium liquide.

Des tentatives effectuées avec une busette réfractaire calibrée en diamètre ont montré l'inefficacité de cette solution pour assurer une régularisation du débit. Malgré un chauffage extérieur, le silicium fondu fige progressivement dans la busette, laquelle voit son débit décroître régulièrement jusqu'au bouchage total.

Pour obtenir en toute sécurité un débit de silicium constant tout au long de la granulation, on utilise, selon l'invention, un dispositif de régulation constitué d'une poche de coulée, d'un basculeur de poche hydraulique muni de vérins et d'un actionneur comportant une centrale hydraulique régulée, capable de fournir un débit d'huile asservi à l'avancement des vérins du basculeur. Cet asservissement peut être réalisé grâce à des capteurs électriques servant à mesurer l'avancement des vérins et transmettant une information permettant de réguler la centrale hydraulique. La loi définissant l'avancement des vérins en fonction du temps pour obtenir un débit régulier de silicium a d'abord été établie par le calcul puis ajustée par l'expérience en opérant avec de l'eau pour faciliter la mesure du débit instantané.

Le matériel a été ensuite testé avec une poche de silicium liquide à la température d'environ 1540°C, sans granulation, en déversant le silicium directement dans une lingotière en fonte positionnée sur une bascule électronique fournissant un enregistrement du poids en fonction du temps. On a pu ainsi régler un débit de 80 kg/mn avec une précision de +/- 3%.

Cet équipement a été ensuite utilisé pour alimenter directement en silicium fondu une cuve de granulation.

Avec le dispositif selon l'invention, on peut fonctionner de manière régulière en évitant toute explosion.

92% au moins des granules obtenus ont une taille comprise entre 1 et 10 mm. Ces granules sont broyés et tamisés pour conduire à la poudre de silicium utilisable dans la réaction de chlorométhylation.

Les contrôles de structure métallurgique et les tests de fabrication de méthylchlorosilanes montrent que les granules obtenus conduisent à de bonnes performances pour la productivité et la sélectivité de la réaction de synthèse.

Le procédé et le dispositif selon l'invention peuvent également être utilisés avec profit pour la granulation d'autres produits, en particulier les laitiers métallurgiques et notamment le laitier résultant de la fabrication du magnésium par réduction métallothermique de la dolomie.

### Exemples

### Exemple 1

On a construit une cuve cylindrique de diamètre 2 m et de capacité 4,5 m³ que l'on a remplie d'eau, l'eau étant renouvelée en permanence avec un débit de 30 m³/h.

On a mesuré dans la cuve des vitesses locales de 0,05 à 0,1 m/s. On a effectué dans cette cuve plusieurs tentatives de granulation de silicium en coulant du silicium fondu dans un four à induction de capacité 450 kg. Le basculement du four était commandé manuellement, en visant à opérer de façon régulière, la durée de la coulée étant d'environ 10 mn.

Sur l'ensemble des essais, l'opération a dû être interrompue en moyenne une fois sur deux à cause d'une explosion.

### Exemple 2

On a installé sur le système hydraulique de commande de basculement du four à induction de l'exemple 1 un dispositif de régulation selon l'invention, de manière à obtenir un débit constant de silicium fondu pendant toute la durée de la coulée.

L'efficacité du système a été testée en coulant dans une lingotière en fonte posée sur une bascule électronique enregistrant le poids en fonction du temps.

On a pu ainsi régler un débit instantané de silicium liquide de 75 +/- 2 kg/mn, et on a repris les essais de granulation de l'exemple 1, sans noter cette fois d'explosion.

### Exemple 3

On a modifié l'alimentation en eau de la cuve de granulation pour obtenir des vitesses locales de 0,3 à 0,6 m/s, puis on a repris les essais de l'exemple 2 sans autre modification.

On a constaté que les opérations de granulation se déroulaient sans explosion.

### Exemple 4

On a refait les essais avec le même four et la même cuve de granulation, mais en opérant avec différents débits de silicium liquide, les autres conditions opératoires étant celles de l'exemple 3.

On a noté la réapparition d'explosions dont la fréquence augmente avec le débit de silicium liquide. On a ainsi, suivant le débit:

| | |
|---|---|
| 65 kg/mn: | pas d'explosion |
| 90 kg/mn: | fréquence d'environ 1% |
| 140 kg/mn: | fréquence d'environ 20% |
| 280 kg/mn: | fréquence d'environ 50% |

## Revendications

**1)** Procédé de préparation de granules de silicium ou d'alliage de silicium à partir de métal liquide par solidification dans un bain de refroidissement, caractérisé en ce que le débit de métal liquide est maintenu constant pendant toute la durée de granulation à l'aide d'un dispositif de régulation.

**2)** Procédé selon la revendication 1, caractérisé en ce que 92% au moins des granulés obtenus ont une taille comprise entre 1 et 10 mm.

**3)** Dispositif de régulation pour la mise en oeuvre du procédé selon l'une des revendications 1 ou 2, caractérisé en ce qu'il est constitué d'une poche de coulée, d'un basculeur de poche et d'un actionneur régulé commandant le basculeur.

**4)** Dispositif selon la revendication 3, caractérisé en ce que le basculeur de poche est équipé de vérins hydrauliques et que l'actionneur est une centrale hydraulique régulée en fonction de l'avancement des vérins.

**5)** Dispositif selon la revendication 4, caractérisé en ce qu'il comprend des capteurs électriques mesurant l'avancement des vérins et transmettant cette information à l'actionneur.
